# EUROPÄISCHE PATENTANMELDUNG

(11) **EP 0 593 994 A1**
(43) Veröffentlichungstag der Anmeldung: **27.04.1994**
(21) Anmeldenummer: 93116298.6
(22) Anmeldetag: 08.10.1993
(51) Int. Cl.: E01H 5/06, F16C 11/04, F16C 33/22

(54) **Lenkerverbindung**

(30) Priorität: 23.10.1992 DE 4235839
(71) Anmelder: Schmidt Holding Europe GmbH, D-79837 St. Blasien (DE)
(72) Erfinder: Hirt, Max, D-79804 Dogern (DE); Hirt, Roswitha, D-79872 Bernau (DE)
(74) Vertreter: Grättinger, Günter

(57) **Zusammenfassung**

Ein Schneepflug mit ausweichbarer Schar (1) bzw. Scharsegmenten, die mittels unterer und oberer Lenker (2, 3) an einem Tragrahmen (5) angelenkt sind, besitzt zur Verbesserung seiner Querverstellung obere Lenker (3) aus elastomerem Werkstoff und untere Lenker (2) aus Metall, wobei deren Augen (16) jeweils durch einen elastomeren Hohlkörper ausgekleidet sind, welcher eine feststehende Nabe verschwenkbar umfaßt.

## Beschreibung

Die Erfindung betrifft eine Lenkerverbindung zwischen einem Tragrahmen und einer Pflugschar eines Schneepflugs.

Lenkerpflüge mit einer oder mehreren Pflugscharen sind seit langem bekannt. Beispielsweise bestehen die Lenker bei einem bekannten Schneepflug mit ausweichbarer Schar (DE-AS 1278465) aus kräftigen, an beiden Enden eingespannten Bändern aus Gummi oder Kunststoff, durch welche Geräuschdämpfung und Stoßdämpfung des Pfluges verbessert werden. Bei Pflügen mit besonders großen Anstellwinkeln ist es ferner bekannt (DE-PS 3603496), derartige, aus elastomerem Werkstoff bestehende Lenker knickbar auszubilden, so daß sie sich beim Auffahren der Räumleiste des Pfluges gegen ein Hindernis entsprechend verlängern bzw. verkürzen können, und zwar unter Aufrechterhaltung einer ausreichenden Rückstellkraft.

Mit den bekannten Elastomerlenkern, die sich stark verformen können, ergeben sich somit Vorteile beim Überfahren von Hindernissen im Straßenprofil; außerdem ermöglichen die Elastomerlenker eine gute Seitenanpassung der Schar entsprechend der Neigung des Straßenprofils. Nachteilig ist allerdings, daß die Elastomerlenker zu unkontrollierten Knickbewegungen neigen, wenn starke Seitenkräfte auf die Schar einwirken, wie beispielsweise beim Arbeiten im Randwall oder in hohem Schnee. Für schwierige Räumaufgaben ist die Stabilität der Elastomerlenker somit nicht ausreichend.

Demgegenüber besteht die Aufgabe gemäß der vorliegenden Erfindung darin, die Lenker bei einem Lenkerpflug derart auszubilden, daß sie ein seitliches Anpassen der Pflugschar an das Straßenprofil ermöglichen, wobei von einer Größenordnung von 20 bis 30 mm pro Meter Scharbreite ausgegangen wird; ein Ausknicken der Pflugschar soll jedoch selbst unter schwierigen Räumbedingungen ausgeschlossen sein; schließlich soll das Überfahren von Hindernissen durch entsprechendes Ausweichen der Pflugschar an den nach oben schwenkenden Lenkern problemlos möglich sein.

Diese Ziele werden erfindungsgemäß in der Weise erreicht, daß zumindest an einem der Anlenkpunkte des Lenkers eine feststehende Welle aus Metall vorgesehen ist, auf der ein Hohlteil aus elastomerem Werkstoff verschwenkbar geführt ist, welches entweder durch den Lenker selbst gebildet, oder in dessen Auge eingesetzt ist. Nach diesem Vorschlag kann der Lenker entweder insgesamt aus elastomerem Werkstoff bestehen, wobei dessen Anlenkpunkte Bohrungen aufweisen, die jeweils ein Hohlteil bilden. Es kann aber auch nur ein in das Auge eingesetztes Hohlteil, z.B. in Form einer Buchse oder eines Kugelgelenks aus elastomerem Werkstoff sein, während der Lenker selbst aus Stahl, Guß oder sonstigem Metall oder aus einem Kunststoff mit vergleichbaren Festigkeitseigenschaften besteht. Wesentlich ist dabei, daß sich das Hohlteil aus elastomerem Material um eine feststehende Welle oder Kugel dreht bzw. um diese verschwenkt wird. Eine Gelenkbewegung zwischen Metallteilen scheidet dabei aus.

Der Fachmann wird sich hinsichtlich Dimensionierung und Werkstoffwahl für den Lenker bzw. das Hohlteil nach dem erwünschten Grad der Verformung einerseits bzw. den erforderlichen Festigkeits- und Führungseigenschaften des Lenkers andererseits entscheiden.

Die Welle kann vorteilhaft durch eine auf einem Bolzen gelagerte Spannbuchse gebildet sein. Die Spannbuchse ist dabei z.B. zwischen zwei Konsolblechen derart eingespannt, daß sie sich keinesfalls mehr verdrehen kann. Sie bildet das stählerne Lager für das elastomere Hohlteil, welches lenkerseitig vorgesehen ist. Dieses Hohlteil besteht zweckmäßig aus einer Buchse aus elastomerem Material, z.B. Polyurethan, welche auf der Nabe verschwenkbar geführt ist. In einer besonders einfachen Ausführungsform kann es aber auch durch eine Bohrung im Anlenkpunkt eines elastomeren Lenkers gebildet sein.

Um eine seitliche Abstützung und dementsprechend exaktere Führungseigenschaften der Lagerstelle im Anlenkpunkt zu erreichen, ist es vorteilhaft, daß die Buchse als geteilte Bundbuchse ausgebildet ist. Anstelle einer geteilten Bundbuchse könnte man auch eine zylindrische Buchse mit zusätzlichen seitlichen Scheiben aus elastomerem Werkstoff verwenden.

Eine optimale Nutzung der Eigenschaften derartiger Lenker an einem Schneepflug mit ausweichbarer Schar bzw. Scharsegmenten, die mittels oberen und unteren Lenkern an einer Tragplatte angelenkt sind, ergibt sich dadurch, daß die oberen Lenker aus elastomerem Werkstoff, die unteren aus Metall bestehen, wobei deren Augen jeweils durch ein elastomeres Hohlteil ausgekleidet sind, welches eine feststehende Welle verschwenkbar umfaßt oder dadurch, daß alle Lenker aus elastomerem Werkstoff bestehen, deren Anlenkpunkte Bohrungen aufweisen, die jeweils mit einer feststehenden Welle aus Metall ein Schwenklager bilden.

Diese Kombinationen verwirklichen jeweils einen idealen Kompromiß zwischen zwei in der Praxis wichtigen Zielsetzungen, nämlich einerseits einer in Querrichtung verschwenkbaren Aufhängung der Schar bzw. der Scharsegmente zwecks Anpassung ihrer Räumkanten an das jeweilige Straßenprofil und andererseits einer dennoch stabilen Führung der Pflugschar, so daß diese stabil an den Lenkern aufgehängt ist und damit auch erheblichen Seitenkräften standhalten kann. Im Rahmen der Erfindung sind selbstverständlich auch andere Kombinationen derartiger Lenker denkbar. Dabei können die Halte- und Verformungseigenschaften der Lenker entsprechend einem gewünschten Scharverhalten, z.B. beim Überfahren von Hindernissen, für jedes Anforderungsprofil geeignet eingestellt werden. Wichtige Einflußfaktoren sind dabei neben der Geometrie und der Lagergestaltung auch die Härte des verwendeten elastomeren Werkstoffs sowie die Form der Lenker.

Im folgenden wird ein Ausführungsbeispiel der Erfindung anhand der Zeichnung erläutert. Es zeigt:
- Fig. 1: eine Lenkerverbindung bei einem Schneepflug in der Seitenansicht,
- Fig. 2: einen Schnitt gemäß II-II der Fig. 1 und
- Fig. 3: einen Schnitt gem. III-III der Fig. 1.

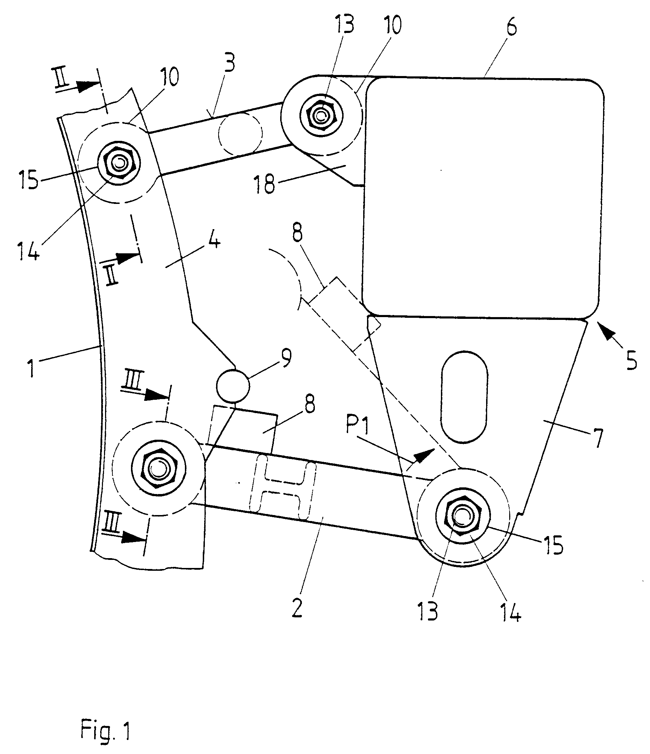

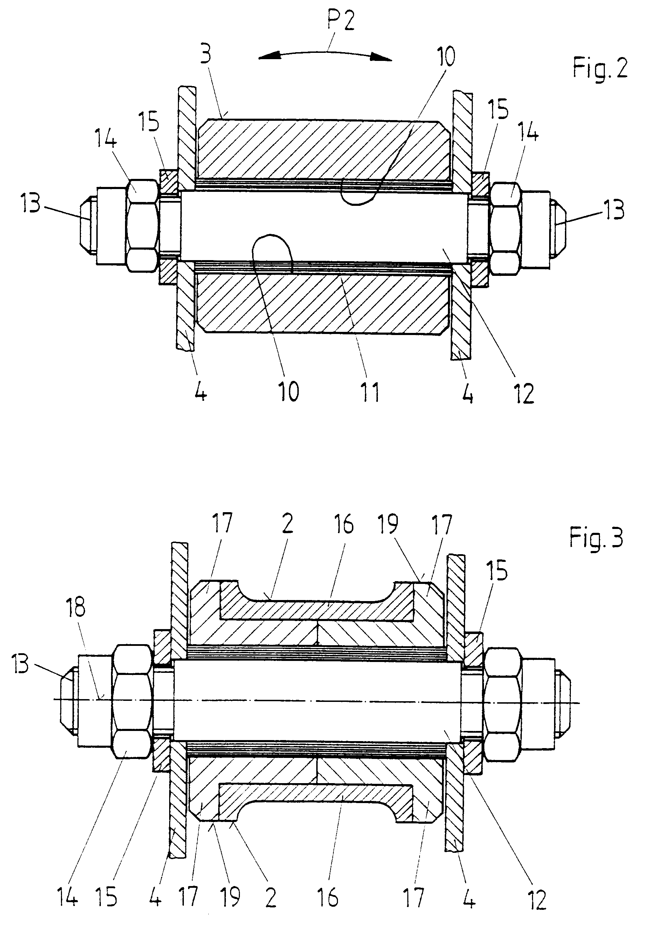

Die Fig. 1 zeigt in der Seitenansicht einen Ausschnitt eines Schneepflugs mit einer Pflugschar 1, zwei unteren Lenkern 2 und zwei oberen Lenkern 3. Die Pflugschar 1, deren oberes und unteres Ende abgeschnitten sind, besitzt auf ihrer Rückseite Konsolbleche 4, wobei sich jeweils zwischen zwei benachbarten Konsolblechen 4 die Lager für die zugeordneten Anlenkpunkte der Lenker 2, 3 befinden, wie zu den Fig. 2 und 3 noch näher erläutert wird. Die Lenker 2, 3 sind andererseits angelenkt an einem Tragrahmen 5, bestehend aus einem parallel zur Pflugschar verlaufenden Hohlprofil 6 und an dessen Unterseite befestigten Stützrippen 7 zur Aufnahme der zugeordneten Lager der unteren Lenker 2. Auf den unteren Lenkern 2 befindet sich zumindest ein elastomerer Anschlag 8. Dieser dient in der normalen Räumstellung dazu, das Ausweichen der Schar nach unten gegen den an der Schar 1 festen Gegenanschlag 9 zu begrenzen; beim Überfahren eines Hindernisses dient der Anschlag 8 dazu, das Ausweichen der Schar 1 nach oben zu begrenzen, indem der Anschlag 8 an der Unterkante des Hohlprofils 6 zur Anlage kommt, da beim Überfahren eines Hindernisses die unteren Lenker 2 im Sinne des Pfeiles P1 bis zum Erreichen dieser Anschlagposition nach oben schwenken können. Zur besseren Verdeutlichung dieser Aussage ist der Anschlag 8 in dieser Schwenkposition strichliert dargestellt. In der in Fig. 1 dargestellten Räumposition der Pflugschar 1 befindet sich der Gegenanschlag 9 knapp oberhalb einer Position, in welcher er auf den elastomeren Anschlag 8 von oben auffährt, wenn die Pflugschar ihre unterste Position erreicht hat.

Die oberen Lenker 3 sind mit ihren von der Schar 1 entfernten Enden zwischen Flanschen 18, welche am Hohlprofil 6 vorgesehen sind, gelagert.

Fig. 2 zeigt im Schnitt die scharseitige Lagerstelle der oberen Lenker 3, welche aus elastomerem Material, wie beispielsweise Polyurethan, bestehen. Die Bohrung 10 des Lenkers 3 umfaßt eine feststehende zylindrische Welle, welche gebildet ist aus einer Spannbuchse 11 aus Stahl, die auf einem Bolzen 12 aus Stahl gelagert ist. Der Bolzen 12 ist als Schraubbolzen ausgebildet, dessen beide Gewindeenden 13 über die Konsolbleche 4 hinausstehen. Auf beiden Gewindeenden 13 sind Muttern 14 mit dosiertem Anzugsdrehmoment, z.B. 300 - 500 Nm, aufgeschraubt, derart, daß die Muttern 14 über Beilagscheiben 15 die beiden Konsolbleche 4 fest gegen die stirnseitigen Enden der Spannbuchse 11 verspannen, so daß diese drehfest eingespannt ist. Um die Spannbuchse 11 ist das entsprechenden Ende des oberen Lenkers 3 verdrehbar angelenkt. Da dieser Lenker 3 insgesamt aus elastomerem Werkstoff besteht, leistet er einer Querverstellung der Pflugschar im Sinne des Pfeiles P2 lediglich im Rahmen seiner inneren Verformungskräfte Widerstand. Anders sind die Verhältnisse in den in Fig. 3 gezeigten Anlenkpunkten der unteren Lenker 2, welche aus Stahl bestehen und lediglich im Bereich ihrer Augen 16 mit einem Hohlteil in Form einer geteilten Bundbuchse 17 aus elastomerem Werkstoff ausgekleidet sind. Die unteren Lenker 2 sind in sich steif, erlauben jedoch eine beschränkte Querverstellung der Pflugschar um eine senkrecht zur Nabenachse 18 und zur Zeichenebene verlaufende Achse, wobei eine zusätzliche Bewegungsbegrenzung durch die seitlichen Bunde 17 der Bundbuchse 19 gegeben ist, welche bei einer entsprechenden Querverformung an der Innenseite eines Konsolblechs 4 zur Anlage kommen. Durch die Verformung der Bundbuchse 19 und der oberen Lenker 3 ergibt sich eine ausreichende Rückstellkraft, welche bewirkt, daß sich die Pflugschar 1 in der von der Straßenoberfläche abgehobenen Position sofort in die Normallage ausrichtet. Der Verformungswiderstand der elastomeren Teile soll jedoch zweckmäßig durch das Eigengewicht der Pflugschar überwunden werden können, so daß die Pflugschar beim Räumen dem jeweiligen Straßenprofil folgt. Beim Überfahren von Hindernissen sorgen die oberen und unteren Lenker dafür, daß eine theoretisch vorgegebene Ausweichkurve zuverlässig eingehalten wird.

Zweckmäßig sind alle Lenker gleich gelagert, im Falle des gewählten Beispiels in Form einer stählernen Spannbuchse 11, die axial zwischen zwei Konsolblechen 4 mittels der Schraubbolzen 12 so stark zusammengedrückt wird, daß sie sich nicht mehr verdrehen kann. Während der Auf- und Abwärtsbewegung der Lenker bilden die Spannbuchsen 11 somit das jeweilige Schwenklager. Die geteilte Bundbuchse 19 kann in den Augen 16 der unteren Lenker 2 bloß eingeklemmt oder aber verklebt oder anvulkanisiert sein; auch jede andere dauerhafte Verbindung kommt in Frage.

Während bei dem vorliegenden Beispiel eine bestimmte Auswahl für die Lagerung der oberen und der unteren Lenker getroffen wurde, sind auch andere Ausgestaltungen denkbar, z.B. indem für einen Schneepflug ausschließlich Lenker in Art der unteren Lenker 2 oder solche in Art der oberen Lenker 3 verwendet werden. Dabei versteht sich von selbst, daß diese Varianten sich in ihren Härteeigenschaften stark unterscheiden und somit nicht für alle Räumaufgaben gleichermaßen gut geeignet sind. Hingegen stellt das beschriebene Ausführungsbeispiel eine für die Praxis optimierte Lösung dar, welche bei guten Stabilitätseigenschaften, hoher Geräuschdämpfung und Stoßdämpfung des Pfluges sowie hoher Verschleißfestigkeit eine um eine horizontale, in Fahrtrichtung weisende Achse pendelnde Anpassung der Räumkante des Schneepflugs an das Oberflächenprofil der Straße ermöglicht.

## Patentansprüche

1. Lenkerverbindung zwischen einem Tragrahmen (5) und einer Pflugschar (1) eines Schneepfluges,
dadurch gekennzeichnet,
daß zumindest an einem der Anlenkpunkte des Lenkers (2, 3) eine feststehende Welle aus Metall vorgesehen ist, auf der ein Hohlteil aus elastomerem Werkstoff verschwenkbar geführt ist, welches entweder durch den Lenker (3) selbst gebildet oder in dessen Auge (16) eingesetzt ist.

2. Lenkerverbindung nach Anspruch 1,
dadurch gekennzeichnet,
daß die Welle durch eine auf einem Bolzen (12) drehfest gelagerte Spannbuchse (11) gebildet ist.

3. Lenkerverbindung nach Anspruch 1,
dadurch gekennzeichnet,
daß das Hohlteil als Buchse ausgebildet ist, welche auf der Welle verschwenkbar geführt ist.

4. Lenkerverbindung nach Anspruch 3,
dadurch gekennzeichnet,
daß die Buchse als geteilte Bundbuchse (19) ausgebildet ist.

5. Lenkerverbindung nach Anspruch 1,
dadurch gekennzeichnet,
daß der Lenker (3) aus elastomerem Werkstoff besteht und eine das Hohlteil bildende Bohrung (10) aufweist.

6. Schneepflug mit ausweichbarer Schar (1) bzw. Scharsegmenten, die mittels unteren und oberen Lenkern (2, 3) an einem Tragrahmen (5) angelenkt sind,
dadurch gekennzeichnet,
daß die oberen Lenker (3) aus elastomerem Werkstoff, die unteren (2) aus Metall bestehen, wobei deren Augen (16) jeweils durch ein elastomeres Hohlteil ausgekleidet sind, welches eine feststehende Welle verschwenkbar umfaßt.

7. Schneepflug mit ausweichbarer Schar (1) bzw. Scharsegmenten, die mittels unteren und oberen Lenkern (2, 3) an einem Tragrahmen (5) angelenkt sind,
dadurch gekennzeichnet,
daß alle Lenker aus elastomerem Werkstoff bestehen, deren Anlenkpunkte Bohrungen aufweisen, die jeweils mit einer feststehenden Welle aus Metall ein Schwenklager bilden.
